# FASCICULE DE BREVET EUROPEEN

(11) **EP 2 950 381 B1**
(45) Date de publication et mention de la délivrance du brevet: **14.12.2016**
(21) Numéro de dépôt: 14170402.3
(22) Date de dépôt: 28.05.2014
(51) Int. Cl.: H01M 10/42

(54) **Batterie intelligente avec un circuit de gestion de la tension d'alimentation, et procédé de fabrication de la batterie**
Intelligente Batterie, die mit einem Schaltkreis zur Steuerung der Speisespannung ausgestattet ist, sowie Herstellungsverfahren dieser Batterie
Smart battery with a circuit for managing the input voltage, and method for manufacturing the battery

(43) Date de publication de la demande: 02.12.2015
(73) Titulaire: EM Microelectronic-Marin SA, 2074 Marin (CH)
(72) Inventeur: Haering, Pascal, 4147 Aesch (CH); Maire, Pascal, 4410 Liestal (CH); Malacarne, Fabien, 2000 Neuchâtel (CH); Marti, Cyril, 2523 Lignières (CH); Théoduloz, Yves, 1400 Yverdon (CH)
(74) Mandataire: Giraud, Eric

(56) Documents cités:
- US-A- 5 637 418
- US-A1- 2009 186 169
- US-A1- 2011 165 452
- US-B1- 6 593 669

## Description

L'invention concerne une batterie intelligente, qui est munie d'un circuit électronique de gestion de la tension d'alimentation.

L'invention concerne également un procédé de fabrication d'une batterie intelligente.

Pour la conception d'une batterie intelligente, un circuit électronique de gestion de la tension d'alimentation est intégré dans la structure de la batterie. Un tel circuit électronique peut comprendre un détecteur de fin de vie de batterie (EOL), un étage oscillateur, une unité de gestion de la puissance, voire une interface de communication. Le circuit électronique comprend également un convertisseur DC-DC entre la borne positive externe et la borne positive interne. Ce convertisseur DC-DC est mis en fonction de manière continue ou quand la tension d'alimentation est proche ou égale à un seuil de fin de vie de batterie (EOL). Il peut s'agir d'un convertisseur élévateur de tension (Boost) ou d'un convertisseur abaisseur de tension (Buck). Cela permet notamment de prolonger la durée de vie de la batterie tout en fournissant une tension suffisante d'alimentation au-dessus d'une limite minimale. Cette batterie peut aussi être du type rechargeable.

Comme indiqué ci-devant, on peut citer le brevet US 6,198,250 B1, qui décrit une telle pile ou batterie intelligente, qui comprend un circuit contrôleur. Le circuit contrôleur est relié aux bornes d'alimentation de la pile ou batterie. Ce circuit contrôleur permet d'étendre la durée de vie de la batterie. Pour ce faire, le circuit contrôleur comprend un convertisseur DC-DC cadencé par un oscillateur pour convertir la tension de la pile ou batterie en une tension de sortie, qui peut être plus élevée qu'une tension de coupure ou une tension de fin de vie de batterie. Le convertisseur peut être enclenché dès l'instant où la tension de batterie atteint un seuil de tension de fin de vie de batterie de manière à prolonger la durée de vie de la batterie.

Selon la figure 5B du brevet US 6,198,250 B1, le circuit contrôleur est connecté dans une position centrale au couvercle arrière de la batterie, qui constitue la borne négative de la batterie et à une des substances électrochimiques définissant un pôle négatif. Le circuit contrôleur est relié par une borne d'entrée à une des substances électrochimiques définissant un pôle positif interne par l'intermédiaire d'une patte de connexion électrique. Le circuit contrôleur est relié par une borne de sortie à une cloison définissant une borne positive externe de la batterie par l'intermédiaire d'une autre patte de connexion électrique. Un isolateur doit encore être prévu entre le circuit contrôleur et les substances électrochimiques. L'agencement du circuit contrôleur occupe une place relativement importante dans la structure de la batterie, ce qui constitue un inconvénient. Un tel agencement du circuit contrôleur ne permet ainsi pas de le disposer facilement dans une batterie de plus petite dimension, c'est-à-dire dans une batterie plus petite qu'une batterie de type AAA.

Une autre batterie intelligente, qui pourrait être considérée comme l'état de la technique le plus proche de l'objet de l'invention, est décrite dans le brevet US 6,593,669 B1.

L'invention a donc pour but de fournir une batterie intelligente, qui est munie d'un module électronique à circuit électronique de gestion de la tension d'alimentation et pouvant équiper une batterie d'une structure conventionnelle de petite dimension.

A cet effet, l'invention concerne une batterie intelligente munie d'un module électronique à circuit électronique de gestion de la tension d'alimentation, qui comprend les caractéristiques mentionnées dans la revendication indépendante 1.

Des formes d'exécution particulières de la batterie intelligente sont définies dans les revendications dépendantes 2 à 24.

Un avantage de la batterie intelligente réside dans le fait que toute l'électronique peut être intégrée dans une structure de batterie standard de petite dimension. La plaque à circuit imprimé portant le circuit électronique ne comprend des pistes conductrices que sur une première face et avec une seconde face isolante susceptible d'être fixée à l'une ou l'autre des substances chimiques.

Avantageusement le circuit électronique est relié depuis une borne de sortie à une ou plusieurs premières plages de connexion électrique sur la première face de la plaque à circuit imprimé par une ou plusieurs pistes conductrices. La ou les premières plages de connexion sont reliées directement de préférence à la cuvette comme borne positive externe de la batterie. Le circuit électronique est également relié aux deux substances chimiques par l'intermédiaire d'une ou plusieurs secondes et troisièmes plages de connexion par des pistes conductrices. De préférence, les secondes plages de connexion sont disposées sur des onglets fixés sur des talons supports d'un support isolant et les troisièmes plages de connexion sont disposées sur d'autres onglets pliés à 180° et connectés à la seconde substance chimique. Les secondes plages de connexion contactent une paroi intérieure du couvercle, qui est reliée à la première substance chimique.

A cet effet, l'invention concerne un procédé de fabrication d'une batterie intelligente, qui comprend les caractéristiques mentionnées dans la revendication indépendante 25.

Des étapes particulières du procédé de fabrication sont définies dans les revendications dépendante 26 à 30.

Les buts, avantages et caractéristiques de la batterie intelligente munie d'un module électronique à circuit électronique de gestion de la tension d'alimentation, et de son procédé de fabrication apparaîtront mieux dans la description suivante sur la base d'au moins une forme d'exécution non limitative et illustrée par les dessins sur lesquels :
la figure 1 représente de manière simplifiée les composants de la batterie intelligente munie du circuit électronique de gestion de la tension d'alimentation selon l'invention,
les figures 2a et 2b représentent des vues en coupe diamétrale de la batterie intelligente selon l'invention une fois assemblée ou en vue en éclaté,
les figures 3a et 3b représentent des vues tridimensionnelles en éclaté de dessus et de dessous de la batterie intelligente selon l'invention, et
les figures 4a et 4b représentent des vues tridimensionnelles de dessous et de dessus du module électronique de la batterie intelligente selon l'invention.

Dans la description suivante, tous les composants intégrés de la batterie intelligente, qui sont bien connus d'un homme du métier dans ce domaine technique, ne sont décrits que de manière simplifiée.

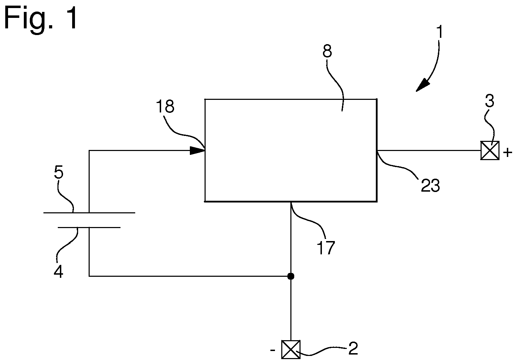

La figure 1 représente schématiquement les composants de la batterie intelligente 1. Cette batterie peut se présenter sous la forme d'une batterie ou pile bouton comme expliqué ci-après pour pouvoir être placée dans un logement de batterie d'un instrument électrique, tel qu'une montre. Cette batterie intelligente sous forme de batterie bouton sert à l'alimentation électrique des éléments électroniques de l'instrument électrique.

La batterie intelligente 1 comprend au moins un circuit électronique 8 de gestion de la tension d'alimentation. Le circuit électronique est relié par une de ses plages de connexion 18 à une borne positive interne 5 de la batterie, qui est définie comme la cathode 5, et est aussi relié pour son fonctionnement à une borne négative interne 4 de la batterie, qui est définie comme l'anode. La borne négative interne 4 de la batterie peut être directement reliée à une borne négative externe 2, alors que la sortie du circuit électronique 8 peut être reliée directement à une borne positive externe 3. L'alimentation électrique d'un instrument électrique est fournie par les deux bornes externes 2 et 3 de la structure de la batterie.

La cathode 5 et l'anode 4 de la batterie sont constituées par deux substances chimiques liées l'une à l'autre avec interposition d'un séparateur. Ces deux substances chimiques réagissent chimiquement dans un milieu électrolyte pour créer une énergie électrique fournie par la cathode 5 et l'anode 4. Ces substances chimiques peuvent être constituées de Lithium (Li) pour définir l'anode 4 et d'oxyde de manganèse (MnO2) pour définir la cathode 5.

Le circuit électronique 8 peut comprendre entre la cathode 5 et la borne positive externe 3, un convertisseur DC-DC, une unité de traitement ou contrôle reliée au convertisseur, et un oscillateur pour contrôler le convertisseur DC-DC et l'unité de traitement. De manière à économiser de l'énergie de la batterie, le convertisseur DC-DC peut être avantageusement un convertisseur du type Buck, c'est-à-dire un convertisseur abaissant la tension d'alimentation. Ce convertisseur peut être continuellement en fonction jusqu'à ce que la tension fournie par la batterie atteigne un seuil de fin de vie de pile (EOL). Dans ce cas de figure, une connexion directe entre la borne positive externe 3 et la cathode 5 est effectuée en étant commandé par l'unité de traitement.

Le convertisseur DC-DC du circuit électronique 8 peut être configuré selon une programmation mémorisée dans une mémoire de l'unité de traitement pour pouvoir agir comme un élévateur de tension ou un abaisseur de tension. Il peut être configuré également pour tenir compte d'un mode de charge ou de décharge de la batterie. Dans le cas d'une charge de la batterie, le convertisseur DC-DC peut plutôt être configuré comme un élévateur de tension par exemple.

Comme le circuit électronique 8 doit être disposé dans une batterie 1 de petite dimension, telle qu'une batterie du type bouton, le nombre de composants électroniques doit être réduit. La taille de la structure de batterie peut être de l'ordre de 20 mm de diamètre et 3.2 mm d'épaisseur. Il peut être avantageusement envisagé d'intégrer tous les composants électroniques dans un unique circuit intégré. Dans ce cas de figure, il est nécessaire d'utiliser un oscillateur avec un résonateur du type MEMS intégré ou un oscillateur du type RC complètement intégré.

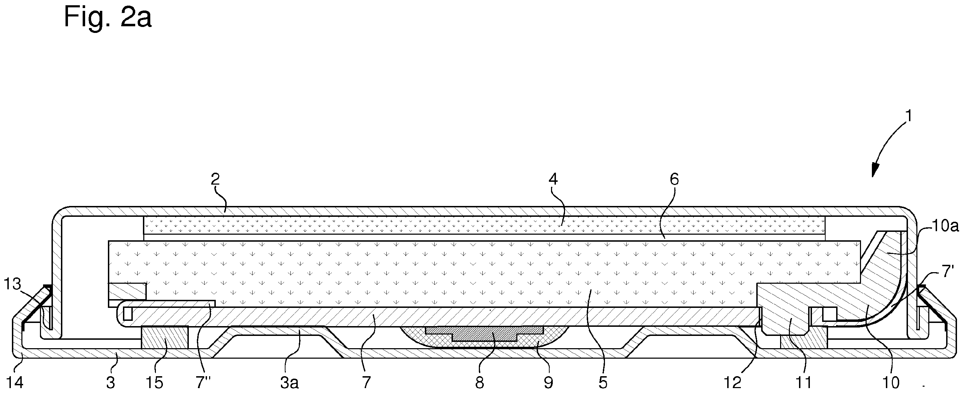

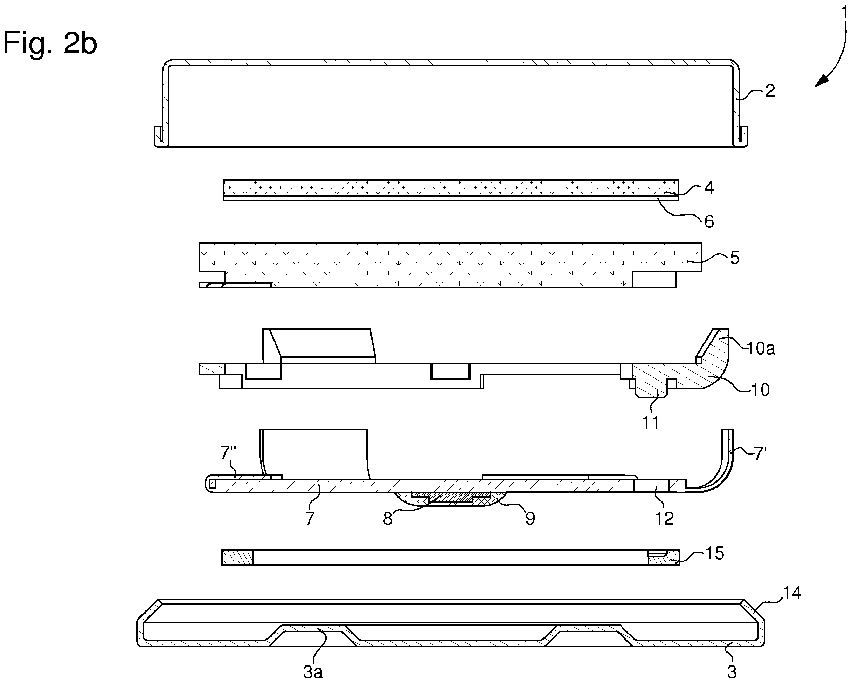

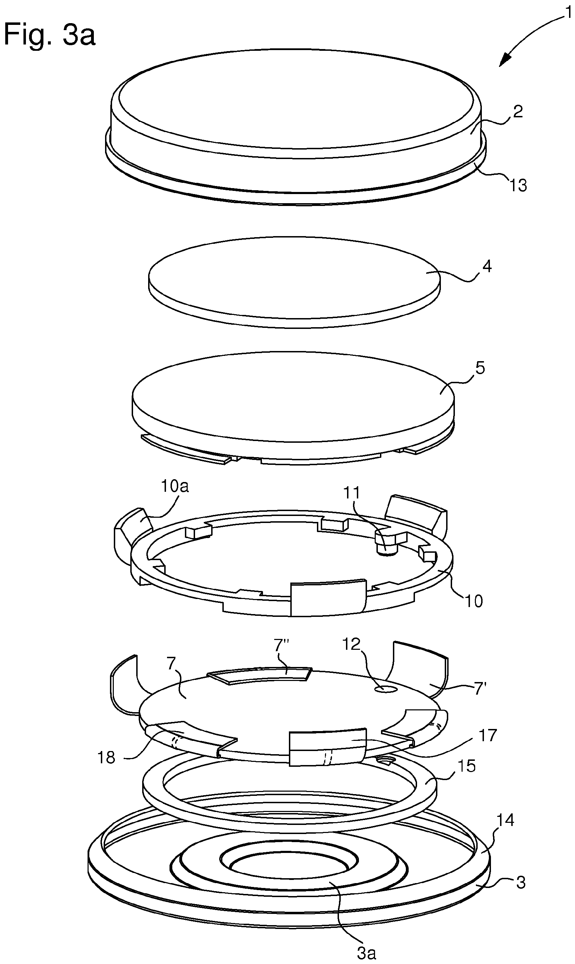

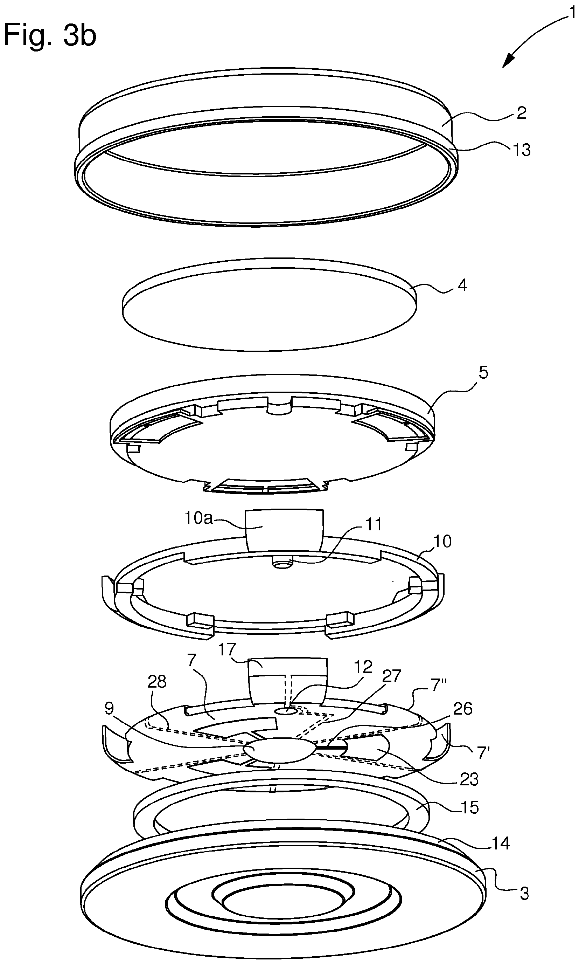

La structure de la batterie intelligente 1 est maintenant décrite en référence aux figures 2a, 2b, 3a, 3b, 4a et 4b. Cette batterie 1 comprend principalement une première substance chimique 4 et une seconde substance chimique 5, qui sont liées l'une à l'autre par l'intermédiaire d'un séparateur 6, et un module électronique 7, 8, 9, qui comprend le circuit électronique 8 de gestion de la tension d'alimentation. Le circuit électronique est relié électriquement aux première et seconde substances chimiques.

La première substance chimique définit l'anode 4, alors que la seconde substance chimique définit la cathode 5. Les première et seconde substances chimiques réagissent chimiquement dans un milieu électrolyte traditionnel. Cela permet de créer une énergie électrique fournie entre la cathode 5, qui est une borne positive interne de la batterie et l'anode 4, qui est une borne négative interne de la batterie. Avantageusement, la première substance chimique 4 est du Lithium (Li), alors que la seconde substance chimique 5 est de l'oxyde de manganèse (MnO2).

La batterie intelligente 1 comprend encore une boîte 2, 3 enfermant tous les composants de la batterie. Cette boîte est composée d'une cuvette 3 et d'un couvercle 2, qui sont tous les deux réalisés dans un matériau conducteur d'électricité étant donné que le couvercle est la borne négative externe et la cuvette est la borne positive externe de la batterie. Le couvercle 2 peut être de forme générale cylindrique avec une partie supérieure, qui peut être plane, et une paroi latérale cylindrique, qui est terminée par une bordure périphérique 13 de fixation. La cuvette 3 comprend un fond et une portion de bordure 14 pour permettre d'être fixée de manière isolée au couvercle notamment par une opération de sertissage.

Une fois que les composants intérieurs de la batterie sont montés depuis le fond de la cuvette 3, le couvercle 2 est monté sur la cuvette 3. La paroi latérale avec la bordure périphérique 13 du couvercle 2 est insérée dans l'ouverture de la portion de bordure 14 de la cuvette 3. Les composants sont maintenus pressés entre la surface intérieure de la partie supérieure du couvercle 2 et le fond de la cuvette 3. Après cela, la portion de bordure 14 est repliée vers la bordure périphérique 13 de la surface extérieure de la paroi du couvercle par l'opération de sertissage par exemple avec interposition d'une garniture d'étanchéité représentée en noire sur la figure 2a. Grâce à cette garniture d'étanchéité, cela permet d'isoler électriquement le couvercle 2 de la cuvette 3 tout en assurant l'étanchéité de la batterie terminée.

La première substance chimique 4, qui définit l'anode de la batterie, vient directement en contact de la surface intérieure de la partie supérieure du couvercle 2, qui représente également la borne négative externe 2 de la batterie. Par contre, la seconde substance chimique 5, qui définit la cathode de la batterie, est reliée au circuit électronique 8 comme expliqué ci-après. La liaison de la seconde substance chimique avec une borne d'entrée du circuit électronique 8 constitue la borne positive interne de la batterie intelligente 1.

Le module électronique portant le circuit électronique 8 est monté sur une face de la seconde substance chimique 5. Ce module électronique comprend une plaque à circuit imprimé 7, sur une face de laquelle est monté et connecté au moins le circuit électronique 8, qui est encapsulé dans un matériau d'encapsulation 9. La plaque à circuit imprimé 7 ne présente de préférence qu'une première face avec une couche de pistes conductrices 26, 27, 28 et une couche d'isolation sur la couche de pistes conductrices. Une seconde face isolante de la plaque à circuit imprimé 7 est fixée ou en contact de la seconde substance chimique 5. De préférence le circuit électronique 8 est disposé dans une position centrale de la plaque à circuit imprimé 7.

Le circuit électronique 8 est relié à au moins une première plage de connexion électrique 23 par au moins une première piste conductrice 26 sur la première face de la plaque à circuit imprimé 7. La première piste conductrice 26 est reliée à au moins une borne de sortie du circuit électronique 8. De préférence, il peut être prévu au moins trois premières plages de connexion électrique 23 régulièrement espacées et décrivant des portions de cercle. Ces trois premières plages de connexion 23 sont de préférence identiques et disposées à mi-distance entre le centre et la périphérie de la plaque à circuit imprimé 7. De ce fait, il peut être également prévu, depuis le circuit électronique 8, trois premières pistes conductrices 26 pour relier chacune la première plage de connexion correspondante 23.

Chaque première plage de connexion 23 est destinée à venir en contact d'une zone de connexion électrique 3a de la cuvette 3, qui définit la borne positive externe de la batterie. Cette zone de connexion 3a peut avantageusement être de forme annulaire de diamètre équivalent au diamètre décrit par les premières plages de connexion 23. Cette zone de connexion 3a s'étend vers l'intérieur de la batterie depuis le fond de la cuvette 3. Une fois que tous les composants sont montés entre le couvercle 2 et la cuvette 3, cette zone de connexion électrique 3a vient s'appuyer sur chaque première plage de connexion 23 pour établir une connexion électrique. Il peut aussi être prévu de souder les premières plages de connexion 23 sur la zone de connexion électrique 3a.

Le circuit électronique 8 est encore relié à au moins une seconde plage de connexion électrique 17 par au moins une seconde piste conductrice 27. Cette seconde plage de connexion électrique 17 doit être connectée à la borne négative interne, qui est aussi la borne négative externe 2 comme expliqué ci-après. Cette borne négative externe du couvercle est en contact direct avec la première substance chimique 4, qui définit l'anode. La seconde piste conductrice 27 est reliée à au moins une borne de masse du circuit électronique 8. De préférence, il est prévu trois secondes plages de connexion électrique 17 et trois secondes pistes conductrices 27 reliées chacune à une seconde plage de connexion 17 correspondante.

Les trois secondes plages de connexion 17 sont de préférence disposées chacune sur un premier onglet 7' correspondant de la plaque à circuit imprimé 7. Les trois premiers onglets 7' s'étendent vers l'extérieur de la périphérie, qui peut être circulaire, de la plaque à circuit imprimé 7. De préférence, ils peuvent présenter une courbure pour la connexion des secondes plages de connexion 17 à la surface intérieure de la paroi du couvercle 2. Préférentiellement, les trois premiers onglets de forme identique sont disposés en périphérie en étant régulièrement espacés les uns des autres, c'est-à-dire le centre de chaque premier onglet est espacé de 120° du centre d'un autre premier onglet adjacent.

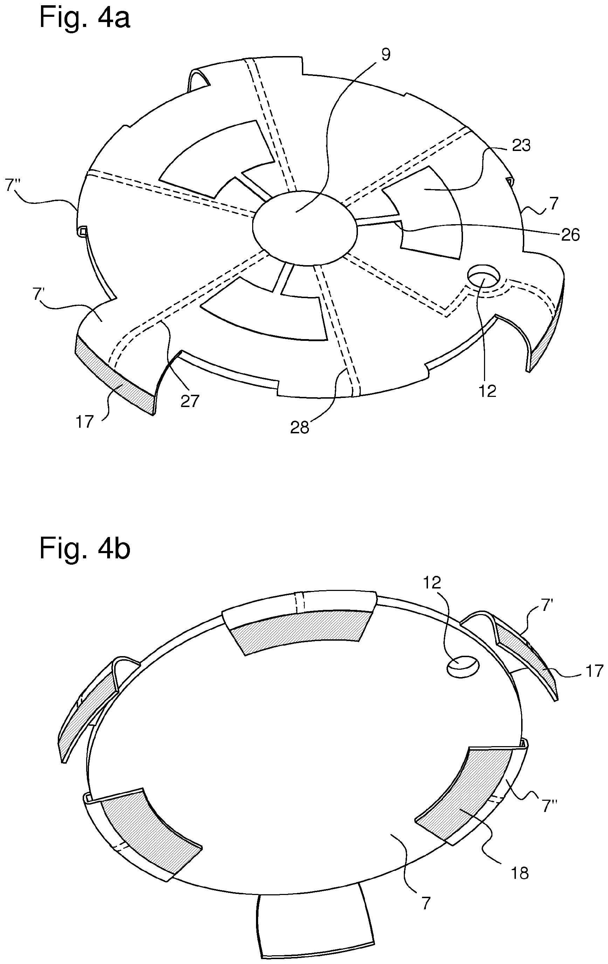

Il est à noter que toute la plaque à circuit imprimé 7 peut être rigide ou flexible. Il peut être envisagé d'avoir la base de fixation rigide de la plaque à circuit imprimé 7, qui porte le circuit électronique 8, alors qu'au moins les trois premiers onglets 7' peuvent être conçus flexibles. La plaque à circuit imprimé 7 est de préférence un substrat isolant en poly-imide (PI) standard sur lequel des pistes conductrices notamment en cuivre sont gravées. Une couche d'isolation ou de couverture également en poly-imide (PI) est déposée sur la couche de cuivre pour isoler toutes les pistes conductrices comme montré par les traits interrompus notamment à la figure 4a.

Le circuit électronique 8 est encore relié à au moins une troisième plage de connexion électrique 18 par au moins une troisième piste conductrice 28. Cette troisième plage de connexion électrique 18 doit être connectée à la borne positive interne, qui est en liaison directe avec la seconde substance chimique 5 correspondant à la cathode comme expliqué ci-après. La troisième piste conductrice 28 est reliée à au moins une borne d'entrée du circuit électronique 8. De préférence, il est prévu trois troisièmes plages de connexion électrique 18 et trois troisièmes pistes conductrices 28 reliées chacune à une troisième plage de connexion 18 correspondante.

Les trois troisièmes plages de connexion 18 sont de préférence disposées chacune sur un second onglet 7" correspondant de la plaque à circuit imprimé 7. Les trois seconds onglets 7" s'étendent vers l'extérieur de la périphérie circulaire de la plaque à circuit imprimé 7 avant pliage. Chaque second onglet est plié de 180° par rapport à la base de fixation de la plaque à circuit imprimé et fixé sur la seconde face de la plaque à circuit imprimé 7. Après pliage et fixation des seconds onglets, chaque troisième plage de connexion 18 est prévue pour venir contacter électriquement la seconde substance chimique 5.

Préférentiellement, les trois seconds onglets 7" de forme identique sont disposés en périphérie en étant régulièrement espacés les uns des autres, c'est-à-dire le centre de chaque second onglet est espacé de 120° du centre d'un autre onglet adjacent. Chaque second onglet 7" est également disposé régulièrement espacé entre deux premiers onglets 7' voisins. La périphérie de la plaque à circuit imprimé 7 comprend donc régulièrement espacés et en alternance les trois premiers onglets 7' et les trois seconds onglets 7" pour la connexion aux deux substances chimiques 4 et 5 avec les secondes et troisièmes plages de connexion 17 et 18.

Comme pour les trois premiers onglets 7', les trois seconds onglets 7" peuvent être conçus flexibles pour faciliter leur pliage et fixation. Par contre, la base de fixation de la plaque à circuit imprimé 7 peut être rigide.

La plaque à circuit imprimé 7 est montée sur un support isolant 10, qui peut être réalisé en matériau plastique. La plaque à circuit imprimé 7 peut être fixée par exemple par collage à ce support isolant 10, qui est également fixé ou collé en périphérie à la seconde substance chimique 5. Ce support isolant peut être de forme générale annulaire avec ainsi une ouverture centrale pour la fixation de la seconde face de la plaque à circuit imprimé 7 à la seconde substance chimique 5. Pour le positionnement avant fixation de la plaque à circuit imprimé 7 sur le support, ledit support isolant 10 présente un ergot 11 de forme cylindrique adapté pour être inséré dans un trou 12 de la plaque à circuit imprimé 7. Le trou est de diamètre égal ou légèrement supérieur au diamètre de l'ergot 11.

Le support isolant 10 présente encore en périphérie au moins un talon support 10a, et de préférence trois talons supports 10a pour supporter et fixer les trois premiers onglets 7'. La surface de fixation extérieure de chaque talon support 10a correspond à celle de chaque premier onglet à fixer. De préférence, la surface extérieure de chaque talon 10a est courbée pour faciliter la fixation de chaque onglet 7' et permettre de légèrement fléchir et contacter par frottement chaque seconde plage de connexion 17 sur la surface intérieure de la paroi du couvercle 2 lors du montage des composants de la batterie. Cette connexion par frottement des secondes plages de connexion est facilitée par l'adaptation des trois talons 10a en périphérie du support isolant 10.

Il peut encore être prévu un anneau d'étanchéité 15 fixé au fond de la cuvette 3 et qui entoure la zone annulaire de connexion 3a. La première face avec la couche isolante de la plaque à circuit imprimé 7 comprime l'anneau d'étanchéité pour venir connecter la zone de connexion 3a sur les premières plages de connexion 23.

Il est expliqué maintenant les différentes étapes du procédé de fabrication de la batterie intelligente 1. Dans des étapes préliminaires, le circuit électronique 8 est tout d'abord monté sur une première face de la plaque à circuit imprimé 7, qui ne comprend qu'une couche de pistes conductrices 26, 27, 28 ne se croisant pas et une couche d'isolation sur la couche de pistes conductrices. Le circuit électronique 8 est relié électriquement de manière traditionnelle aux différentes pistes conductrices avant d'encapsuler le circuit électronique dans un matériau d'encapsulation 9. Les seconds onglets 7" de la plaque à circuit imprimé sont chacun pliés de 180° et fixés sur la seconde face isolante de la plaque à circuit imprimé. Les troisièmes plages de connexion 18 sont ainsi du côté de la seconde face pour une connexion avec la seconde substance chimique 5, qui définit la cathode.

Une fois le module électronique terminé, les premiers onglets 7' de la plaque à circuit imprimé sont courbés et les secondes faces isolantes des premiers onglets sont collées sur les talons supports 10a de forme complémentaire du support isolant 10 tout en insérant l'ergot 11 du support dans le trou 12 de positionnement de la plaque à circuit imprimé 7. La première face à pistes conductrices isolées de la plaque à circuit imprimé est disposée sur l'anneau d'étanchéité 15, qui est fixé d'un côté intérieur sur le fond de la cuvette 3. Cet anneau d'étanchéité peut être en matériau de colle pour permettre de coller la première face de la plaque à circuit imprimé sur l'anneau d'étanchéité.

La seconde substance chimique 5, qui définit la cathode de la batterie, est fixée sur le support isolant 10 en contact de la seconde face de la plaque à circuit imprimé 7 et des troisièmes plages de connexion 18. Avant ou après avoir fixé la seconde substance chimique 5 sur le support 10, le séparateur 6 et la première substance chimique 4 sont assemblés sur la seconde substance chimique 5.

Le couvercle 2 est ensuite monté sur la cuvette 3 en pressant les talons supports 10a, sur lesquels sont fixés les premiers onglets 7' portant extérieurement les secondes plages de connexion 17. Un contact électrique notamment par frottement peut ainsi être établi entre la surface intérieure de la paroi du couvercle 2 et les plages de connexion 17. En étant guidé par les talons supports 10a, la bordure périphérique 13 de fixation du couvercle est inséré dans l'ouverture de la cuvette en pressant les composants intercalaires intérieurs de la batterie.

Une fois le couvercle 2 positionné sur la cuvette 3, la portion de bordure 14 est repliée vers la bordure périphérique 13 de la surface extérieure de la paroi du couvercle. En effectuant cette opération de sertissage, une garniture d'étanchéité est comprimée entre la portion de bordure 14 et la bordure périphérique 13 afin d'isoler électriquement le couvercle 2 de la cuvette 3 et assurer l'étanchéité de la batterie terminée.

A partir de la description qui vient d'être faite, plusieurs variantes de la batterie intelligente munie du module électronique à circuit électronique de gestion de la tension d'alimentation peuvent être conçues par l'homme du métier sans sortir du cadre de l'invention définie par les revendications. La connexion aux deux substances chimiques du circuit électronique de gestion de la tension d'alimentation sur la plaque à circuit imprimé peut être effectuée d'une autre manière par exemple au moyen de pattes conductrices de connexion. Le circuit électronique peut être placé en périphérie de la plaque à circuit imprimé et une connexion aux deux substances chimiques peut être effectuée par des trous conducteurs à travers la plaque à circuit imprimé. Les premières plages de connexion peuvent venir en contact d'une zone de connexion électrique du couvercle, qui définit la borne négative externe de la batterie en fonction de la configuration de l'agencement de connexion du circuit électronique. Les secondes plages de connexion peuvent venir contacter directement la première substance chimique avec les premiers onglets pliés de 180° et la seconde face de la plaque à circuit imprimé fixé sur la première substance chimique. La zone de connexion du couvercle est de forme annulaire de diamètre équivalent au diamètre décrit par les premières plages de connexion. La seconde face de la plaque à circuit imprimé peut être fixée ou en contact de la première substance chimique, alors que la seconde substance chimique peut être directement liée à la borne positive externe de la cuvette.

## Revendications

1. Batterie intelligente (1), qui comprend un module électronique muni d'un circuit électronique (8) de gestion de la tension d'alimentation, ledit module électronique étant disposé dans une structure de boîte, qui comprend une cuvette (3) en matériau conducteur d'électricité et un couvercle (2) en matériau conducteur d'électricité, ledit couvercle (2) étant fixé sur la cuvette (3) par l'intermédiaire d'une garniture d'étanchéité, la cuvette définissant une borne positive externe de la batterie, alors que le couvercle définissant une borne négative externe de la batterie, la batterie comprenant en outre dans la structure de boîte, une première substance chimique (4) en tant qu'anode, reliée à une seconde substance chimique (5) en tant que cathode,
**caractérisée en ce que** le module électronique comprend une plaque à circuit imprimé (7) présentant une première face avec une couche de pistes conductrices (26, 27, 28), le circuit électronique (8) étant monté et connecté à des pistes conductrices (26, 27, 28) sur la première face, et une seconde face isolante fixée à
ou en contact d'une des substances chimiques,
**en ce que** le circuit électronique (8) est relié depuis une borne de sortie, à au moins une première plage de connexion électrique (23) sur la première face de la plaque à circuit imprimé (7) par au moins une première piste conductrice (26), la première plage de connexion électrique étant reliée directement à la cuvette (3) ou au couvercle (2),
**en ce que** le circuit électronique (8) est encore relié à au moins une seconde plage de connexion électrique (17) par au moins une seconde piste conductrice (27), cette seconde plage de connexion électrique étant reliée électriquement à la première substance chimique définissant une borne négative interne, et qui est reliée au couvercle, si la première plage de connexion est reliée directement à la cuvette, et
**en ce que** le circuit électronique (8) est encore relié à au moins une troisième plage de connexion électrique (18) par au moins une troisième piste conductrice (28), cette troisième plage de connexion électrique étant reliée électriquement à la seconde substance chimique définissant une borne positive interne, qui est reliée à la cuvette, si la première plage de connexion est reliée directement au couvercle.

2. Batterie intelligente (1) selon la revendication 1, **caractérisée en ce qu'**une couche d'isolation est déposée sur la couche de pistes conductrices (26, 27, 28), en laissant accès à la première plage de connexion électrique (23) pour la connexion électrique directe à la cuvette (3) ou au couvercle (2).

3. Batterie intelligente (1) selon la revendication 2, **caractérisée en ce que** la plaque à circuit imprimé (7) est flexible.

4. Batterie intelligente (1) selon la revendication 2, **caractérisée en ce qu'**elle comprend trois premières plages de connexion électrique (23).

5. Batterie intelligente (1) selon la revendication 4, **caractérisée en ce que** les trois premières plages de connexion électrique (23) sont identiques et disposées à mi-distance entre le centre et la périphérie de la plaque à circuit imprimé (7) de forme circulaire.

6. Batterie intelligente (1) selon la revendication 5, **caractérisée en ce que** les trois premières plages de connexion électrique (23) sont régulièrement espacées et décrivent des portions de cercle.

7. Batterie intelligente (1) selon la revendication 6, **caractérisée en ce que** les trois premières plages de connexion électrique (23) viennent en contact d'une zone de connexion électrique (3a) de la cuvette (3) ou du couvercle (2), la zone de connexion électrique (3a) étant de forme annulaire de diamètre équivalent au diamètre décrit par les trois premières plages de connexion électrique (23).

8. Batterie intelligente (1) selon la revendication 1, **caractérisée en ce que** le circuit électronique (8) est disposé dans une partie centrale de la plaque à circuit imprimé (7).

9. Batterie intelligente (1) selon la revendication 1, **caractérisée en ce que** la seconde plage de connexion électrique (17) est disposée sur un premier onglet (7') de la plaque à circuit imprimé (7).

10. Batterie intelligente (1) selon la revendication 9, **caractérisée en ce que** le premier onglet (7') s'étend vers l'extérieur de la périphérie de la plaque à circuit imprimé (7).

11. Batterie intelligente (1) selon la revendication 10, **caractérisée en ce qu'**elle comprend trois secondes plages de connexion électrique (17), qui sont disposées chacune sur un premier onglet (7') correspondant de la plaque à circuit imprimé (7).

12. Batterie intelligente (1) selon la revendication 11, **caractérisée en ce que** les trois premiers onglets (7') de forme identique sont disposés en périphérie de la plaque à circuit imprimé (7) de forme circulaire en étant régulièrement espacés les uns des autres, avec le centre de chaque premier onglet espacé de 120° du centre d'un autre premier onglet adjacent.

13. Batterie intelligente (1) selon la revendication 1, **caractérisée en ce que** la troisième plage de connexion électrique (18) est disposée sur un second onglet (7") de la plaque à circuit imprimé (7).

14. Batterie intelligente (1) selon la revendication 13, **caractérisée en ce que** le second onglet (7") s'étend vers l'extérieur de la périphérie de la plaque à circuit imprimé (7).

15. Batterie intelligente (1) selon la revendication 14, **caractérisée en ce qu'**elle comprend trois troisièmes plages de connexion électrique (18), qui sont disposées chacune sur un second onglet (7") correspondant de la plaque à circuit imprimé (7).

16. Batterie intelligente (1) selon la revendication 15, **caractérisée en ce que** les trois seconds onglets (7") de forme identique sont disposés en périphérie de la plaque à circuit imprimé (7) de forme circulaire en étant régulièrement espacés les uns des autres, avec le centre de chaque second onglet espacé de 120° du centre d'un autre second onglet adjacent.

17. Batterie intelligente (1) selon la revendication 16, **caractérisée en ce que** chaque second onglet (18) est fixé sur la seconde face de la plaque à circuit imprimé (7) en étant plié de 180° par rapport à une base de fixation de la plaque à circuit imprimé, de manière à venir contacter électriquement la seconde substance chimique.

18. Batterie intelligente (1) selon la revendication 1, **caractérisée en ce qu'**elle comprend trois secondes plages de connexion électrique (17) disposées chacune sur un premier onglet (7') correspondant de la plaque à circuit imprimé (7) et trois troisièmes plages de connexion électrique (18) disposées chacune sur un second onglet (7") correspondant de la plaque à circuit imprimé, et **en ce que** la périphérie de la plaque à circuit imprimé (7) comprend donc régulièrement espacés et en alternance les trois premiers onglets (7') et les trois seconds onglets (7") pour la connexion aux deux substances chimiques (4, 5) avec les secondes et troisièmes plages de connexion électrique (17, 18).

19. Batterie intelligente (1) selon la revendication 18, **caractérisée en ce que** les trois premiers onglets (7') et les trois seconds onglets (7") de la plaque à circuit imprimé (7) sont en matériau flexible.

20. Batterie intelligente (1) selon la revendication 18, **caractérisée en ce que** la plaque à circuit imprimé (7) est montée sur un support isolant (10) de forme annulaire, qui est fixé à une des substances chimiques, **en ce que** la seconde face de la plaque à circuit imprimé (7) est fixée à une des substances chimiques à travers une ouverture du support isolant (10).

21. Batterie intelligente (1) selon la revendication 20, **caractérisée en ce que** le support isolant (10) présente en périphérie trois talons supports (10a) pour supporter et fixer les trois premiers onglets (7').

22. Batterie intelligente (1) selon la revendication 21, **caractérisée en ce que** la surface de fixation extérieure de chaque talon support (10a) correspond à celle de chaque premier onglet à fixer, avec une surface extérieure de chaque talon (10a) courbée.

23. Batterie intelligente (1) selon la revendication 22, **caractérisée en ce que** les secondes plages de connexion électrique (17) sont connectées directement au couvercle (2), **en ce que** les trois troisièmes plages de connexion électrique (18), qui sont sur les trois seconds onglets (7") pliés et fixés sur la seconde face de la plaque à circuit imprimé (7), sont électriquement connectés à la seconde substance chimique (5), et **en ce que** trois premières plages de connexion électrique (23) sont connectées directement à la cuvette (3).

24. Batterie intelligente (1) selon la revendication 1, **caractérisée en ce que** le circuit électronique (8), qui est monté et connecté à des pistes conductrices (26, 27, 28) sur la première face de la plaque à circuit imprimé, est encapsulé dans un matériau d'encapsulation, et **en ce que** le circuit électronique (8) comprend un convertisseur DC-DC, une unité de traitement reliée au convertisseur, et un oscillateur pour contrôler le convertisseur DC-DC et l'unité de traitement, ledit convertisseur DC-DC étant configuré pour abaisser la tension d'alimentation de la batterie jusqu'à ce que la tension fournie par la batterie atteigne un seuil de fin de vie.

25. Procédé de fabrication d'une batterie intelligente (1) selon l'une des revendications précédentes, le procédé comprenant les étapes consistant à :
- monter et relier électriquement le circuit électronique (8) sur une première face de la plaque à circuit imprimé (7), qui comprend une couche de pistes conductrices (26, 27, 28), au moins une première piste conductrice (26) reliant une borne de sortie du circuit électronique à au moins une première plage de connexion électrique (23), au moins une seconde piste conductrice (27) reliant une borne de masse du circuit électronique à au moins une seconde plage de connexion électrique (17), et au moins une troisième piste conductrice (28) reliant une borne d'entrée du circuit électronique à au moins une troisième plage de connexion électrique (18),
- fixer ou mettre en contact une seconde face isolante de la plaque à circuit imprimé (7) sur une des première et seconde substances chimiques (4, 5), qui sont fixées l'une à l'autre,
- relier électriquement la seconde plage de connexion électrique (17) à la première substance chimique (4),
- relier électriquement la troisième plage de connexion électrique (18) à la seconde substance chimique (5),
- placer l'ensemble du module électronique avec les première et seconde substances chimiques dans la cuvette (3),
- monter le couvercle (2), qui comprend une bordure périphérique (13) de fixation, sur la cuvette (3) en insérant ladite bordure périphérique dans une ouverture de la cuvette, la première plage de connexion électrique (23) étant reliée directement à la cuvette (3) ou au couvercle (2), et
- replier une portion de bordure (14) de la cuvette vers la bordure périphérique (13) du couvercle avec interposition d'une garniture d'étanchéité pour isoler le couvercle (2) de la cuvette (3).

26. Procédé de fabrication selon la revendication 25, le procédé comprenant après avoir monté et relié électriquement le circuit électronique (8) sur la première face de la plaque à circuit imprimé (7), les étapes de :
- monter la plaque à circuit imprimé (7) sur un support isolant (10) de forme annulaire,
- fixer le support isolant à une des substances chimiques, et
- fixer la seconde face de la plaque à circuit imprimé (7) sur une des substances chimiques à travers une ouverture du support isolant (10).

27. Procédé de fabrication selon la revendication 26, pour lequel la seconde plage de connexion électrique (17) est disposée sur un premier onglet (7'), qui s'étend vers l'extérieur en périphérie de la plaque à circuit imprimé (7), et la troisième plage de connexion électrique (18) est disposée sur un second onglet (7") qui s'étend vers l'extérieur en périphérie de la plaque à circuit imprimé (7), **caractérisé en ce qu'**avant ou après avoir monté et relié électriquement le circuit électronique (8) sur la première face de la plaque à circuit imprimé (7), le second onglet est plié de 180° et fixé sur la seconde face de la plaque à circuit imprimé, et **en ce que** la troisième plage de connexion électrique (18) vient en contact de la seconde substance chimique (5) lors de la fixation de la seconde face de la plaque à circuit imprimé sur la seconde substance chimique.

28. Procédé de fabrication selon la revendication 27, pour lequel le support isolant (10) comprend en périphérie au moins un talon support (10a), **caractérisé en ce que** la seconde face du premier onglet (7') est courbé et collé sur le talon support (10a) de forme complémentaire du support isolant.

29. Procédé de fabrication selon la revendication 28, pour lequel il est prévu trois premiers onglets (7') avec trois secondes plages de connexion (17), et trois seconds onglets (7") avec trois troisièmes plages de connexion (18), les trois premiers onglets et les trois seconds onglets étant régulièrement espacés et disposés en alternance en périphérie de la plaque à circuit imprimé, et pour lequel le support isolant (10) comprend trois talons supports (10a) régulièrement espacés en périphérie, **caractérisé en ce qu'**avant ou après avoir monté et relié électriquement le circuit électronique (8) sur la première face de la plaque à circuit imprimé (7), les trois seconds onglets (7") sont pliés de 180° et fixés sur la seconde face de la plaque à circuit imprimé, et **en ce que** les secondes faces des trois premiers onglets (7') sont courbés et collés sur le talon support (10a) correspondant.

30. Procédé de fabrication selon la revendication 29, **caractérisé en ce qu'**avant de monter le couvercle (2), la première face de la plaque à circuit imprimé (7) est placée sur un anneau d'étanchéité (15), qui est fixé d'un côté intérieur sur un fond de la cuvette (3), et **en ce que** lors du montage du couvercle, une paroi intérieure du couvercle contacte les secondes plages de connexion (17), qui sont disposées sur les premiers onglets (7') fixés aux talons supports (10a), et une zone annulaire (3a) du fond de la cuvette vient contacter la ou les premières plages de connexion électrique (23).

## Patentansprüche

1. Intelligente Batterie (1), die ein elektronisches Modul umfasst, das mit einer elektronischen Schaltung (8) zum Steuern der Versorgungsspannung ausgestattet ist, wobei das elektronische Modul in einer Gehäusestruktur angeordnet ist, die einen Becher (3) aus einem die Elektrizität leitenden Material und einem Deckel (2) aus einem die Elektrizität leitenden Material umfasst, wobei der Deckel (2) an dem Becher (3) mittels einer Dichtung befestigt ist, wobei der Becher einen externen positiven Anschluss der Batterie definiert, während der Deckel einen externen negativen Anschluss der Batterie definiert, wobei die Batterie außerdem in der Gehäusestruktur eine erste chemische Substanz (4) als Anode umfasst, die mit einer zweiten chemischen Substanz (5) als Kathode verbunden ist,
**dadurch gekennzeichnet, dass** das elektronische Modul eine gedruckte Leiterplatte (7) umfasst, die eine erste Fläche mit einer Schicht aus Leiterbahnen (26, 27, 28), wobei die elektronische Schaltung (8) an Leiterbahnen (26, 27, 28) auf der ersten Fläche angeordnet und damit verbunden ist, und eine zweite isolierende Fläche, die an einer der chemischen Substanzen befestigt ist oder damit in Kontakt steht, aufweist,
dadurch, dass die elektronische Schaltung (8) von einem Ausgangsanschluss mit mindestens einem ersten elektrischen Verbindungsbereich (23) auf der ersten Fläche der gedruckten Leiterplatte (7) durch mindestens eine erste Leiterbahn (26) verbunden ist, wobei der erste elektrische Verbindungsbereich direkt mit dem Becher (3) oder mit dem Deckel (2) verbunden ist,
dadurch, dass die elektronische Schaltung (8) ferner mit mindestens einem zweiten elektrischen Verbindungsbereich (17) durch mindestens eine zweite Leiterbahn (27) verbunden ist, wobei dieser zweite elektrische Verbindungsbereich elektrisch mit der ersten chemischen Substanz verbunden ist, die einen internen negativen Anschluss definiert, und der mit dem Deckel verbunden ist, wenn der erste Verbindungsbereich direkt mit dem Becher verbunden ist, und
dadurch, dass die elektronische Schaltung (8) ferner mit mindestens einem dritten elektrischen Verbindungsbereich (18) durch mindestens eine dritte Leiterbahn (28) verbunden ist, wobei dieser dritte elektrische Verbindungsbereich elektrisch mit der zweiten chemischen Substanz verbunden ist, die einen internen positiven Anschluss definiert, der mit dem Becher verbunden ist, wenn der erste Verbindungsbereich direkt mit dem Deckel verbunden ist.

2. Intelligente Batterie (1) nach Anspruch 1, **dadurch gekennzeichnet, dass** eine Isolationsschicht auf der Schicht von Leiterbahnen (26, 27, 28) abgelagert ist, wobei zum ersten elektrischen Verbindungsbereich (23) für die direkte elektrische Verbindung mit dem Becher (3) oder dem Deckel (2) ein Zugang belassen ist.

3. Intelligente Batterie (1) nach Anspruch 2, **dadurch gekennzeichnet, dass** die gedruckte Leiterplatte (7) flexibel ist.

4. Intelligente Batterie (1) nach Anspruch 2, **dadurch gekennzeichnet, dass** sie drei erste elektrische Verbindungsbereiche (23) umfasst.

5. Intelligente Batterie (1) nach Anspruch 4, **dadurch gekennzeichnet, dass**
die drei ersten elektrischen Verbindungsbereiche (23) identisch sind und auf halbem Abstand zwischen dem Mittelpunkt und dem Umfang der kreisförmigen gedruckten Leiterplatte (7) angeordnet sind.

6. Intelligente Batterie (1) nach Anspruch 5, **dadurch gekennzeichnet, dass**
die drei ersten elektrischen Verbindungsbereiche (23) regelmäßig beabstandet sind und Kreisabschnitte beschreiben.

7. Intelligente Batterie (1) nach Anspruch 6, **dadurch gekennzeichnet, dass**
die drei ersten elektrischen Verbindungsbereiche (23) mit einer elektrischen Verbindungszone (3a) des Bechers (3) oder des Deckels (2) in Kontakt kommen, wobei die elektrische Verbindungszone (3a) eine ringförmige Form mit einem Durchmesser äquivalent zum Durchmesser, der durch die drei ersten elektrischen Verbindungsbereiche (23) beschrieben wird, aufweist.

8. Intelligente Batterie (1) nach Anspruch 1, **dadurch gekennzeichnet, dass** die elektronische Schaltung (8) in einem zentralen Abschnitt der gedruckten Leiterplatte (7) angeordnet ist.

9. Intelligente Batterie (1) nach Anspruch 1, **dadurch gekennzeichnet, dass** der zweite elektrische Verbindungsbereich (17) auf einem ersten Reiter (7') der gedruckten Leiterplatte (7) angeordnet ist.

10. Intelligente Batterie (1) nach Anspruch 9, **dadurch gekennzeichnet, dass** der erste Reiter (7') sich vom Umfang der gedruckten Leiterplatte (7) nach außen erstreckt.

11. Intelligente Batterie (1) nach Anspruch 10, **dadurch gekennzeichnet, dass** sie drei zweite elektrische Verbindungsbereiche (17) umfasst, die jeweils auf einem ersten entsprechenden Reiter (7') der gedruckten Leiterplatte (7) angeordnet sind.

12. Intelligente Batterie (1) nach Anspruch 11, **dadurch gekennzeichnet, dass** die drei ersten Reiter (7') mit identischer Form am Umfang der kreisförmigen gedruckten Leiterplatte (7) angeordnet sind, wobei sie regelmäßig voneinander beabstandet sind, wobei das Zentrum jedes ersten Reiters um 120° vom Zentrum eines anderen ersten benachbarten Reiters beabstandet ist.

13. Intelligente Batterie (1) nach Anspruch 1, **dadurch gekennzeichnet, dass** der dritte elektrische Verbindungsbereich (18) auf einem zweiten Reiter (7") der gedruckten Leiterplatte (7) angeordnet ist.

14. Intelligente Batterie (1) nach Anspruch 13, **dadurch gekennzeichnet, dass** der zweite Reiter (7") sich vom Umfang der gedruckten Leiterplatte (7) nach außen erstreckt.

15. Intelligente Batterie (1) nach Anspruch 14, **dadurch gekennzeichnet, dass** sie drei dritte elektrische Verbindungsbereiche (18) umfasst, die jeweils auf einem zweiten entsprechenden Reiter (7") der gedruckten Leiterplatte (7) angeordnet sind.

16. Intelligente Batterie (1) nach Anspruch 15, **dadurch gekennzeichnet, dass** die drei zweiten Reiter (7") mit identischer Form am Umfang der kreisförmigen gedruckten Leiterplatte (7) angeordnet sind, wobei sie regelmäßig voneinander beabstandet sind, wobei das Zentrum jedes zweiten Reiters um 120° vom Zentrum eines anderen zweiten benachbarten Reiters beabstandet ist.

17. Intelligente Batterie (1) nach Anspruch 16, **dadurch gekennzeichnet, dass** jeder zweite Reiter (18) an der zweiten Fläche der gedruckten Leiterplatte (7) befestigt ist, wobei er in Bezug auf eine Befestigungsbasis der gedruckten Leiterplatte um 180° umgebogen ist, um mit der zweiten chemischen Substanz elektrisch in Kontakt zu kommen.

18. Intelligente Batterie (1) nach Anspruch 1, **dadurch gekennzeichnet, dass** sie drei zweite elektrische Verbindungsbereiche (17) umfasst, die jeweils auf einem ersten entsprechenden Reiter (7') der gedruckten Leiterplatte (7) angeordnet sind, und drei dritte elektrische Verbindungsbereiche (18), die jeweils auf einem zweiten entsprechenden Reiter (7") der gedruckten Leiterplatte angeordnet sind, und dadurch, dass der Umfang der gedruckten Leiterplatte (7) folglich regelmäßig beabstandet und abwechselnd die drei ersten Reiter (7') und die drei zweiten Reiter (7") für die Verbindung mit den zwei chemischen Substanzen (4, 5) mit den zweiten und dritten elektrischen Verbindungsbereichen (17, 18) umfasst.

19. Intelligente Batterie (1) nach Anspruch 18, **dadurch gekennzeichnet, dass** die drei ersten Reiter (7') und die drei zweiten Reiter (7") der gedruckten Leiterplatte (7) aus einem flexiblen Material bestehen.

20. Intelligente Batterie (1) nach Anspruch 18, **dadurch gekennzeichnet, dass** die gedruckte Leiterplatte (7) auf einem ringförmigen isolierenden Träger (10) angeordnet ist, der an einer der chemischen Substanzen befestigt ist, und dadurch, dass die zweite Fläche der gedruckten Leiterplatte (7) an einer der chemischen Substanzen durch eine Öffnung des isolierenden Trägers (10) befestigt ist.

21. Intelligente Batterie (1) nach Anspruch 20, **dadurch gekennzeichnet, dass** der isolierende Träger (10) am Umfang drei Stützstege (10a) zum Abstützen und Befestigen der drei ersten Reiter (7') aufweist.

22. Intelligente Batterie (1) nach Anspruch 21, **dadurch gekennzeichnet, dass** die äußere Befestigungsoberfläche jedes Stützstegs (10a) jener von jedem zu befestigenden ersten Reiter mit einer gekrümmten äußeren Oberfläche jedes Stegs (10a) entspricht.

23. Intelligente Batterie (1) nach Anspruch 22, **dadurch gekennzeichnet, dass** die zweiten elektrischen Verbindungsbereiche (17) direkt mit dem Deckel (2) verbunden sind, dadurch, dass die drei dritten elektrischen Verbindungsbereiche (18), die sich auf den drei zweiten Reitern (7") befinden, die umgebogen und an der zweiten Fläche der gedruckten Leiterplatte (7) befestigt sind, mit der zweiten chemischen Substanz (5) elektrisch verbunden sind, und dadurch, dass drei erste elektrische Verbindungsbereiche (23) direkt mit dem Becher (3) verbunden sind.

24. Intelligente Batterie (1) nach Anspruch 1, **dadurch gekennzeichnet, dass** die elektronische Schaltung (8), die an Leiterbahnen (26, 27, 28) auf der ersten Fläche der gedruckten Leiterplatte angeordnet und damit verbunden ist, in ein Einkapselungsmaterial eingekapselt ist, und dadurch, dass die elektronische Schaltung (8) einen Gleichstrom-Gleichstrom-Umsetzer, eine Verarbeitungseinheit, die mit dem Umsetzer verbunden ist, und einen Oszillator zum Steuern des Gleichstrom-Gleichstrom-Umsetzers und der Verarbeitungseinheit umfasst, wobei der Gleichstrom-Gleichstrom-Umsetzer zum Senken der Versorgungsspannung der Batterie, bis die von der Batterie gelieferte Spannung einen Lebensendeschwellenwert erreicht, ausgebildet ist.

25. Verfahren zur Herstellung einer intelligenten Batterie (1) nach einem der vorangehenden Ansprüche, wobei das Verfahren die Schritte umfasst, die bestehen im:
- Anordnen und elektrischen Verbinden der elektronischen Schaltung (8) auf einer ersten Fläche der gedruckten Leiterplatte (7), die eine Schicht von Leiterbahnen (26, 27, 28) umfasst, wobei mindestens eine erste Leiterbahn (26) einen Ausgangsanschluss der elektronischen Schaltung mit mindestens einem ersten elektrischen Verbindungsbereich (23) verbindet, mindestens eine zweite Leiterbahn (27) einen Masseanschluss der elektronischen Schaltung mit mindestens einem zweiten elektrischen Verbindungsbereich (17) verbindet, und mindestens eine dritte Leiterbahn (28) einen Eingangsanschluss der elektronischen Schaltung mit mindestens einem dritten elektrischen Verbindungsbereich (18) verbindet,
- Befestigen oder In-Kontakt-Bringen einer zweiten isolierenden Fläche der gedruckten Leiterplatte (7) an/mit der ersten oder der zweiten chemischem Substanz (4, 5), die aneinander befestigt sind,
- elektrischen Verbinden des zweiten elektrischen Verbindungsbereichs (17) mit der ersten chemischen Substanz (4),
- elektrischen Verbinden des dritten elektrischen Verbindungsbereichs (18) mit der zweiten chemischen Substanz (5),
- Anordnen des elektronischen Moduls im Ganzen mit der ersten und der zweiten chemischen Substanz im Becher (3),
- Befestigen des Deckels (2), der einen Befestigungsumfangsrand (13) umfasst, am Becher (3) durch Einsetzen des Umfangsrandes in eine Öffnung des Bechers, wobei der erste elektrische Verbindungsbereich (23) direkt mit dem Becher (3) oder mit dem Deckel (2) verbunden wird, und
- Umbiegen eines Randabschnitts (14) des Bechers zum Umfangsrand (13) des Deckels unter Zwischenfügung einer Dichtung, um den Deckel (2) vom Becher (3) zu isolieren.

26. Herstellungsverfahren nach Anspruch 25, wobei das Verfahren, nachdem die elektronische Schaltung (8) an der ersten Fläche der gedruckten Leiterplatte (7) angeordnet und damit elektrisch verbunden wurde, die Schritte umfasst:
- Anordnen der gedruckten Leiterplatte (7) auf einem ringförmigen isolierenden Träger (10),
- Befestigen des isolierenden Trägers an einer der chemischen Substanzen, und
- Befestigen der zweiten Fläche der gedruckten Leiterplatte (7) an einer der chemischen Substanzen durch eine Öffnung des isolierenden Trägers (10) hindurch.

27. Herstellungsverfahren nach Anspruch 26, für das der zweite elektrische Verbindungsbereich (17) auf einem ersten Reiter (7') angeordnet wird, der sich am Umfang der gedruckten Leiterplatte (7) nach außen erstreckt, und der dritte elektrische Verbindungsbereich (18) auf einem zweiten Reiter (7") angeordnet wird, der sich am Umfang der gedruckten Leiterplatte (7) nach außen erstreckt, **dadurch gekennzeichnet, dass**, bevor oder nachdem die elektronische Schaltung (8) an der ersten Fläche der gedruckten Leiterplatte (7) angeordnet und damit elektrisch verbunden wurde, der zweite Reiter um 180° umgebogen und an der zweiten Fläche der gedruckten Leiterplatte befestigt wird, und dadurch, dass der dritte elektrische Verbindungsbereich (18) mit der zweiten chemischen Substanz (5) bei der Befestigung der zweiten Fläche der gedruckten Leiterplatte an der zweiten chemischen Substanz in Kontakt kommt.

28. Herstellungsverfahren nach Anspruch 27, für das der isolierende Träger (10) am Umfang mindestens einen Stützsteg (10a) umfasst, **dadurch gekennzeichnet, dass** die zweite Fläche des ersten Reiters (7') gekrümmt und an den komplementär geformten Stützsteg (10a) des isolierenden Trägers geklebt wird.

29. Herstellungsverfahren nach Anspruch 28, für das drei erste Reiter (7') mit drei zweiten Verbindungsbereichen (17) und drei zweite Reiter (7") mit drei dritten Verbindungsbereichen (18) vorgesehen werden, wobei die drei ersten Reiter und die drei zweiten Reiter regelmäßig beabstandet und abwechselnd am Umfang der gedruckten Leiterplatte angeordnet werden, und für das der isolierende Träger (10) drei Stützstege (10a) umfasst, die am Umfang regelmäßig beabstandet sind, **dadurch gekennzeichnet, dass**, bevor oder nachdem die elektronische Schaltung (8) an der ersten Fläche der gedruckten Leiterplatte (7) angeordnet und damit elektrisch verbunden wurde, die drei zweiten Reiter (7") um 180° umgebogen und an der zweiten Fläche der gedruckten Leiterplatte befestigt werden, und dadurch, dass die zweiten Flächen der drei ersten Reiter (7') gekrümmt und an den entsprechenden Stützsteg (10a) geklebt werden.

30. Herstellungsverfahren nach Anspruch 29, **dadurch gekennzeichnet, dass** vor dem Montieren des Deckels (2) die erste Fläche der gedruckten Leiterplatte (7) auf einem Dichtungsring (15) angeordnet wird, der mit einer Innenseite an einem Boden des Bechers (3) befestigt ist, und dadurch, dass bei der Montage des Deckels eine Innenwand des Deckels die zweiten Verbindungsbereiche (17) kontaktiert, die auf den ersten Reitern (7') angeordnet sind, die an den Stützstegen (10a) befestigt sind, und einen ringförmigen Bereich (3a) des Bodens des Bechers mit dem oder den ersten elektrischen Verbindungsbereichen (23) in Kontakt kommt.

## Claims

1. Smart battery (1), which includes an electronic module provided with an electronic circuit (8) for controlling the supply voltage, said electronic module being arranged in a case structure, which includes a cup (3) made of electrically conductive material and a cover (2) made of electrically conductive material, said cover (2) being fixed to the cup (3) by means of a sealing gasket, the cup defining an external positive terminal of the battery, whereas the cover defines an external negative terminal of the battery, the battery further including inside the case structure, a first chemical substance (4) as the anode, connected to a second chemical substance (5) as the cathode,
**characterized in that** the electronic module includes a printed circuit board (7) having a first face with a layer of conductive paths (26, 27, 28), the electronic circuit (8) being mounted and connected to conductive paths (26, 27, 28) on the first face, and a second insulating face fixed to or in contact with one of the chemical substances,
**in that** the electronic circuit (8) is connected, from an output terminal, to at least a first electrical connection pad (23) on the first face of the printed circuit board (7) by at least a first conductive path (26), the first electrical connection pad being connected directly to the cup (3) or to the cover (2),
**in that** the electronic circuit (8) is also connected to at least a second electrical connection pad (17) by at least a second conductive path (27), said second electrical connection pad being electrically connected to the first chemical substance defining an internal negative terminal, and which is connected to the cover, if the first connection pad is connected directly to the cup, and
**in that** the electronic circuit (8) is also connected to at least a third electrical connection pad (18) by at least a third conductive path (28), said third electrical connection pad being electrically connected to the second chemical substance defining an internal positive terminal, which is connected to the cup, if the first connection pad is connected directly to the cover.

2. Smart battery (1) according to claim 1, **characterized in that** an insulation layer is deposited on the layer of conductive paths (26, 27, 28), leaving access to the first electrical connection pad (23) for direct electrical connection to the cup (3) or to the cover (2).

3. Smart battery (1) according to claim 2, **characterized in that** the printed circuit board (7) is flexible.

4. Smart battery (1) according to claim 2, **characterized in that** the battery includes three first electrical connection pads (23).

5. Smart battery (1) according to claim 4, **characterized in that** the three first electrical connection pads (23) are identical and disposed midway between the centre and the periphery of the circular printed circuit board (7).

6. Smart battery (1) according to claim 5, **characterized in that** the three first electrical connection pads (23) are evenly spaced and describe portions of a circle.

7. Smart battery (1) according to claim 6, **characterized in that** the three first electrical connection pads (23) come into contact with an electrical connection area (3a) of the cup (3) or of the cover (2), the electrical connection area (3a) being of annular shape and of equivalent diameter to the diameter described by the three first electrical connection pads (23).

8. Smart battery (1) according to claim 1, **characterized in that** the electronic circuit (8) is disposed in a central portion of the printed circuit board (7).

9. Smart battery (1) according to claim 1, **characterized in that** the second electrical connection pad (17) is disposed on a first tab (7') of the printed circuit board (7).

10. Smart battery (1) according to claim 9, **characterized in that** the first tab (7') extends outwards from the periphery of the printed circuit board (7).

11. Smart battery (1) according to claim 10, **characterized in that** the battery includes three second electrical connection pads (17), which are each disposed on a corresponding first tab (7') of the printed circuit board (7).

12. Smart battery (1) according to claim 11, **characterized in that** the three identically-shaped first tabs (7') are disposed at the periphery of the circular printed circuit board (7), evenly spaced from each other, with the centre of each first tab separated by 120° from the centre of another adjacent first tab.

13. Smart battery (1) according to claim 1, **characterized in that** the third electrical connection pad (18) is disposed on a second tab (7") of the printed circuit board (7).

14. Smart battery (1) according to claim 13, **characterized in that** the second tab (7") extends outwards from the periphery of the printed circuit board (7).

15. Smart battery (1) according to claim 14, **characterized in that** the battery includes three third electrical connection pads (18), which are each disposed on a corresponding second tab (7") of the printed circuit board (7).

16. Smart battery (1) according to claim 15, **characterized in that** the three identically-shaped second tabs (7") are disposed at the periphery of the circular printed circuit board (7), evenly spaced from each other, with the centre of each second tab separated by 120° from the centre of another adjacent second tab.

17. Smart battery (1) according to claim 16, **characterized in that** each second tab (7") is fixed to the second face of the printed circuit board (7), folded at 180° relative to a securing base of the printed circuit board, so as to electrically contact the second chemical substance.

18. Smart battery (1) according to claim 1, **characterized in that** the battery includes three second electrical connection pads (17) each disposed on a corresponding first tab (7') of the printed circuit board (7) and three third electrical connection pads (18) each disposed on a corresponding second tab (7") of the printed circuit board, and **in that** the periphery of the printed circuit board (7) therefore includes, alternately and evenly spaced, the three first tabs (7') and the three second tabs (7") for connection to the two chemical substances (4, 5) with the second and third electrical connection pads (17, 18).

19. Smart battery (1) according to claim 18, **characterized in that** the three first tabs (7') and the three second tabs (7") of the printed circuit board (7) are made of flexible material.

20. Smart battery (1) according to claim 18, **characterized in that** the printed circuit board (7) is mounted on an insulating substrate (10) of annular shape, which is fixed to one of the chemical substances, and **in that** the second face of the printed circuit board (7) is fixed to one of the chemical substances through an opening in the insulating support (10).

21. Smart battery (1) according to claim 20, **characterized in that** the insulating support (10) has at the periphery thereof three support heels (10a) for supporting and securing the three first tabs (7').

22. Smart battery (1) according to claim 21, **characterized in that** the external securing surface of each support heel (10a) corresponds to that of each first tab to be secured, with one external surface of each heel (10a) being bent.

23. Smart battery (1) according to claim 22, **characterized in that** the second electrical connection pads (17) are connected directly to the cover (2), **in that** the three third electrical connection pads (18), which are on the three second tabs (7") folded and fixed onto the second face of the printed circuit board (7), are electrically connected to the second chemical substance (5), and **in that** the three first electrical connection pads (23) are connected directly to the cup (3).

24. Smart battery (1) according to claim 1, **characterized in that** the electronic circuit (8), which is mounted and connected to conductive paths (26, 27, 28) on the first face of the printed circuit board, is encapsulated in an encapsulation material, and **in that** the electronic circuit (8) includes a DC-DC converter, a processing unit connected to the converter, and an oscillator for controlling the DC-DC converter and the processing unit, said DC-DC converter being configured to step down the battery supply voltage until the voltage supplied by the battery reaches an end-of-life threshold.

25. Method for manufacturing a smart battery (1) according to any of the preceding claims, the method including the steps consisting in:
- mounting and electrically connecting the electronic circuit (8) on a first face of the printed circuit board (7), which includes a layer of conductive paths (26, 27, 28), at least a first conductive path (26) connecting an output terminal of the electronic circuit to at least a first electrical connection pad (23), at least a second conductive path (27) connecting an earth terminal of the electronic circuit to at least a second electrical connection pad (17), and at least a third conductive path (28) connecting an input terminal of the electronic circuit to at least a third electrical connection pad (18),
- fixing or placing in contact a second insulating face of the printed circuit board (7) on one of the first and second chemical substances (4, 5), which are secured to each other,
- electrically connecting the second electrical connection pad (17) to the first chemical substance (4),
- electrically connecting the third electrical connection pad (18) to the second chemical substance (5),
- placing the assembly of the electronic module and the first and second chemical substances in the cup (3),
- mounting the cover (2), which includes a peripheral mounting edge (13), on the cup (3) by inserting said peripheral edge into an opening in the cup, the first electrical connection pad (23) being connected directly to the cup (3) or to the cover (2), and
- folding down an edge portion (14) of the cup towards the peripheral edge (13) of the cover with the insertion of a sealing gasket to insulate the cover (2) from the cup (3).

26. Manufacturing method according to claim 25, the method including, after mounting and electrically connecting the electronic circuit (8) on the first face of the printed circuit board (7), the steps of:
- mounting the printed circuit board (7) on an insulating support (10) of annular shape,
- fixing the insulating support to one of the chemical substances, and
- fixing the second face of the printed circuit board (7) onto one of the chemical substances through an opening in the insulating support (10).

27. Manufacturing method according to claim 26, wherein the second electrical connection pad (17) is disposed on a first tab (7'), which extends outwards at the periphery of the printed circuit board (7), and the third electrical connection pad (18) is disposed on a second tab (7") which extends outwards at the periphery of the printed circuit board (7), **characterized in that** before or after the electronic circuit (8) is mounted and electrically connected on the first face of the printed circuit board (7), the second tab is folded at 180° and fixed onto the second face of the printed circuit board, and **in that** the third electrical connection pad (18) comes into contact with the second chemical substance (5) when the second face of the printed circuit board is fixed to the second chemical substance.

28. Manufacturing method according to claim 27, wherein the insulating support (10) includes at the periphery thereof at least one support heel (10a), **characterized in that** the second face of the first tab (7') is bent and bonded onto the complementary-shaped support heel (10a) of the insulating support.

29. Manufacturing method according to claim 28, wherein three first tabs (7') are provided with three second connection pads (17), and three second tabs (7") with three third connection pads (18), the three first tabs and the three second tabs being evenly spaced and arranged alternately at the periphery of the printed circuit board, and wherein the insulating support (10) includes three support heels (10a) evenly spaced at the periphery, **characterized in that** before or after the electronic circuit (8) is mounted and electrically connected on the first face of the printed circuit board (7), the three second tabs (7") are folded at 180° and fixed onto the second face of the printed circuit board, and **in that** the second faces of the three first tabs (7') are bent and bonded onto the corresponding support heel (10a).

30. Manufacturing method according to claim 29, **characterized in that** before the cover (2) is assembled, the first face of the printed circuit board (7) is placed on a sealing ring (15), which is fixed, on an inner side, to the base of the cup (3), and **in that** during assembly of the cover, an inner wall of the cover contacts the second connection pads (17), which are disposed on the first tabs (7') fixed to the support heels (10a), and an annular area (3a) of the base of the cup contacts the first electrical connection pad or pads (23).
